# EUROPÄISCHE PATENTSCHRIFT

(11) **EP 1 072 200 B1**
(45) Veröffentlichungstag und Bekanntmachung des Hinweises auf die Patenterteilung: **26.11.2003**
(21) Anmeldenummer: 00110856.2
(22) Anmeldetag: 23.05.2000
(51) Int. Cl.: A24C 5/60, B23K 26/08

(54) **Perforationsvorrichtung**
Perforation apparatus
Dispositif de perforation

(30) Priorität: 02.07.1999 DE 19930330
(43) Veröffentlichungstag der Anmeldung: 31.01.2001
(73) Patentinhaber: Hauni Maschinenbau AG, 21033 Hamburg (DE)
(72) Erfinder: Dombek, Manfred, 21521 Dassendorf (DE)
(74) Vertreter: Eisenführ, Speiser & Partner

(56) Entgegenhaltungen:
- EP-A- 0 659 354
- EP-A- 0 672 356
- DE-A- 2 751 522
- US-A- 5 148 818

## Beschreibung

Die Erfindung betrifft eine Perforationsvorrichtung zum Herstellen von Öffnungen in einer Umfangsoberfläche eines im wesentlichen länglichen, zylinderförmigen Gegenstandes, insbesondere einer Zigarette, mit mindestens einer Lichtquelle zum Erzeugen mindestens eines energiereichen Lichtstrahles, mit dessen Hilfe die Öffnungen in den Gegenstand einbringbar sind, mit einer Rolltrommel mit einer Rotationsachse und einer Umfangsoberfläche, mit einer Gegenrollfläche, die mit der Umfangsoberfläche der Rolltrommel einen Rollkanal zum Erzeugen einer Eigenrotationsbewegung der Gegenstände um ihre Längsachse bildet, während sich die Gegenstände durch den Rollkanal bewegen, mit Strahlführungsmitteln zum Führen des Lichtstrahles derart, daß der Lichtstrahl zumindest während eines Abschnittes der Bewegung der Gegenstände durch den Rollkanal auf die Gegenstände trifft.

Derartige Vorrichtungen sind aus dem Stand der Technik bekannt und dienen in der tabakverarbeitenden Industrie dazu, Rauchartikel, insbesondere Zigaretten, mit einer Zone gewünschter Luftdurchlässigkeit zu versehen, durch die dem Rauch kühle Luft aus der Umgebung beigemischt wird, wenn an dem Rauchartikel gezogen wird. Die kühle Nebenluft beeinflußt die Anteile von Nikotin und Kondensat im Rauch.

Eine bekannte Perforationsvorrichtung, die mit einem Laser arbeitet, ist bspw. aus der US 5,148,818 bekannt. Zum Rollen der Doppelfilterzigaretten dienen zwei koaxial mit Abstand zueinander angeordnete Walzen, um die ein als Rollmittel dienendes Förderband geschlungen ist, so daß sich die Zigaretten zwischen dem Förderband und den Walzen befinden. Da das Förderband mit einer anderen Geschwindigkeit als die Walzen umläuft, werden die zwischen dem Förderband und den Walzen liegenden Zigaretten in eine Eigenrotationsbewegung versetzt. Weiterhin befindet sich in der Mitte zwischen den Walzen ein Laser mit umlaufendem, getaktetem Laserstrahl, der in die Zigaretten die Perforierung einbrennt.

Ein weiterer Stand der Technik ist aus der DE 33 10 930 bekannt. In dieser Druckschrift ist eine Perforationsvorrichtung offenbart, bei der auf einer Trommel umlaufende Zigaretten mit Hilfe eines komplizierten herzförmigen Reflektors, in welchem ein Laserstrahl umläuft, die entsprechenden Perforationen in die Umhüllung der zu perforierenden Zigaretten eingebracht werden.

Noch ein weiterer Stand der Technik ist aus der DE 34 31 051 bekannt. In dieser Druckschrift ist ebenfalls ein Laser mit einer komplizierten Reflektorenanordnung verbunden. Auch hier wird der Laserstrahl über eine aufwendige Anordnung von Spiegeln und rotierenden Reflektoren an die zu perforierende Stelle auf der Umhüllung der auf einer Walze umlaufenden Zigarette geleitet.

Ein weiterer Stand der Technik ist aus der DE 34 31 067 bekannt. Diese Druckschrift stellt eine Kombination aus den beiden zuletzt genannten Druckschriften dar.

Eine weitere Perforationsvorrichtung ist aus der DE 42 18 266 bekannt. Bei dieser Vorrichtung befinden sich die geförderten Zigaretten zwischen mehreren Walzen, so daß sie zwischen diesen Walzen rotiert werden können. Auf der Förderwalze für die Zigaretten sitzt ein Polygonspiegel, welcher einen Laserstrahl auf die zu perforierenden Zigaretten wirft.

Schließlich ist aus der DE 27 51 522 u.a. eine weitere Perforationsvorrichtung bekannt geworden, bei der die Zigaretten zwischen einer Rolltrommel und einem sogenannten Rollklotz zur Eigenrotation gebracht und von einem nachgeführten Laserstrahl perforiert werden. Die Nachführung des Laserstrahls geschieht mit Hilfe einer Trommel, die umfangsseitig eine Vielzahl von Spiegeln trägt. Auch bei diesem Stand der Technik ist daher ein sehr hoher Aufwand notwendig, um ein zufriedenstellendes Ergebnis der Perforation erzielen zu können.

Aufgrund der kinematischen Gegebenheiten können die Perforationen nur während einer halben Eigenrotation der Zigarette in die Zigarette eingebracht werden. Daher wird die Zigarette mit Hilfe des Laserstrahls vollständig durchstoßen, was energieaufwendig ist und relativ große Löcher im Hüllmaterial zur Folge hat.

Aufgabe der vorliegenden Erfindung ist es daher, den genannten Stand der Technik zu verbessern, und eine Perforationsvorrichtung zur Verfügung zu stellen, die möglichst einfach eine Perforierung des gesamten Umfanges der länglichen, zylinderförmigen Gegenstände, insbesondere von Zigaretten ermöglicht.

Die vorstehende Aufgabe wird bei einer Perforationsvorrichtung der eingangs genannten Art erfindungsgemäß dadurch gelöst, daß die Strahlführmittel innerhalb der Rolltrommel angeordnet sind.

Die Vorteile der Erfindung liegen insbesondere darin, daß die Konstruktionen des Standes der Technik vereinfacht werden. Denn durch das Anordnen der Strahlführmittel innerhalb der Rolltrommel kann auf aufwendige Spiegelkonstruktionen zum Umleiten bzw. Umlenken des Lichtstrahls auf den jeweils gewünschten Auftreffpunkt verzichtet werden. Es fallen insbesondere zusätzliche, mit Spiegeln versehene Trommeln weg.

Eine bevorzugte Ausführungsform weist ein Strahlführungsmittel auf, welches einen um eine Schwenkachse schwenkbaren Schwenkspiegel enthält. Mit Hilfe eines solchen Schwenkspiegels läßt sich auf einfache Weise der Lichtstrahl, welcher bevorzugt ein von einem Laser erzeugter Laserstrahl ist, von der Lichtquelle bzw. dem Laser auf den Auftreffpunkt des zu perforierenden Gegenstandes umlenken. Dabei ist der Schwenkspiegel bevorzugt so angebracht, daß die Schwenkachse des Schwenkspiegels in der Spiegeloberfläche liegt.

Eine weitere bevorzugte Ausführungsform der Erfindung zeichnet sich dadurch aus, daß die Schwenkachse des Schwenkspiegels koaxial zur Rotationsachse der Rolltrommel verläuft, so daß der Abstand zwischen dem Schwenkspiegel und dem Auftreffpunkt des Lichtstrahles auf den zu perforierenden Gegenständen gleich dem Radius der Rolltrommel ist und während der Schwenkbewegung des Schwenkspiegels gleich bleibt.

Bei einer anderen bevorzugten Ausführungsform der erfindungsgemäßen Perforationsvorrichtung ist die Schwenkachse des Schwenkspiegels bezüglich der Rotationsachse der Rolltrommel parallel derart verschoben, daß der Abstand der Schwenkachse des Schwenkspiegels von dem Auftreffpunkt des Laserstrahles auf den Gegenständen kleiner ist als der Radius der Rolltrommel. Diese Ausführungsform bietet den Vorteil, daß der Laserstrahl mit Hilfe einer entsprechenden Optik noch innerhalb der Rolltrommel ausreichend fokussiert werden kann, um Lochdurchmesser in der Größenordnung von 0,1 mm zu realisieren. Denn die normalerweise in der tabakverarbeitenden Industrie verwendeten Laserstrahlen haben einen Durchmesser von 7 - 11 mm. Es ist daher notwendig, den Laserstrahl durch entsprechende Optiken zu verjüngen, um die gewünschten Lochdurchmesser auf den Zigaretten zu erzielen. Zur Fokussierung der Laserstrahlen werden zumeist Sammellinsen oder Kombinationen von Sammel- und Zerstreuungslinsen verwendet. Die vorliegende Ausführungsform mit der Anordnung der Brechungsoptik zwischen Schwenkspiegel und Auftreffpunkt bietet den Vorteil, daß die entsprechenden Linsen in ihren Außenabmessungen relativ klein gewählt werden können und somit problemlos innerhalb der Rolltrommel Platz finden. Es sind jedoch mit Verwendung anderer Optiken auch Ausführungsformen möglich, bei denen der Abstand zwischen dem Schwenkspiegel und dem Auftreffpunkt größer ist als der Radius der Rolltrommel.

Eine besonders bevorzugte Ausführungsform der erfindungsgemäßen Perforationsvorrichtung zeichnet sich dadurch aus, daß die Umfangsgeschwindigkeit der Rolltrommel derart ist, daß in dem Zeitintervall, in welchem benachbarte Gegenstände auf einem Zuförderer einen Weg entsprechend ihrem Abstand zurücklegen, die Gegenstände im Rollkanal einen Weg zurücklegen, der länger ist als ihr Umfang. Dabei ist es besonders bevorzugt, wenn die Zeit innerhalb des Zeitintervalles, in welchem die Gegenstände den ihren Umfang überragenden Wegabschnitt zurücklegen, für ein Rückschwenken des Schwenkspiegels in eine Anfangsposition nutzbar ist, um an der selben Stelle beginnend den nächsten Gegenstand perforieren zu können. Mit Hilfe dieser vorteilhaften Ausführungsformen wird daher durch einfache Maßnahme der Erhöhung der Umfangsgeschwindigkeit der Rolltrommel ein Zeitfenster eröffnet, in welchem der energiereiche Lichtstrahl mit Hilfe eines Schwenkspiegels zurück in die Anfangsposition der Perforationsbewegung geschwenkt werden kann. Dies gilt unabhängig vom Teilungsabstand der Gegenstände im Rollkanal. Ist beispielsweise der Teilungsabstand der Gegenstände auf einem Zufördermittel 12 π, so kann der Teilungsabstand der Gegenstände im Rollkanal gleich diesem Teilungsabstand sein, etwas kleiner sein oder etwas größer sein. Für die in diesem Absatz beschriebenen Merkmale wird - unabhängig von der Position der Strahlführmittel - selbständiger Schutz beansprucht.

Bei einer weiteren bevorzugten Ausführungsform der Erfindung ist die Brechungsoptik zwischen der Lichtquelle und dem Schwenkspiegel angeordnet. Auch hier können alle möglichen Kombinationen von Sammellinsen und Zerstreuungslinsen als Mittel zur Fokussierung des Laserstrahles verwendet werden.

Bei beiden vorgenannten Ausführungsformen ist es darüber hinaus möglich, die Sammellinsen mit Oberflächenbeschichtungen zu versehen und eine sogenannte diffraktive Optik zu schaffen. Derartige Oberflächenbeschichtungen können beispielsweise aus einem Laserstrahl mit rundem Querschnitt einen Laserstrahl mit eckigem Querschnitt erzeugen, wenn eckige Löcher bei der Perforation der Zigaretten gewünscht werden. Auch können diffraktive Optiken aus einem einfallenden Laserstrahl zwei ausfallende Laserstrahlen erzeugen. Besonders vorteilhaft ist eine diffraktive Optik, weil sie es ermöglicht, die Fokussierung des Laserstrahles zu verstärken. Somit können auch bei relativ schwachen Sammellinsen und relativ großen Laserstrahldurchmessern (> 7mm) relativ kleine Löcher (< 0,1 mm) auf den zu perforierenden Gegenständen erzeugt werden.

Bei allen vorgenannten Ausführungsformen ist weiter bevorzugt, eine möglichst große Tiefenschärfe des durch die Optik abgebildeten Licht- bzw. Laserstrahles zu erzeugen, weil dann die Änderung des Abstandes zwischen Schwenkspiegel und Auftreffpunkt auf dem zu perforierenden Gegenstand, die durch den gegenüber dem Mittelpunkt der Rolltrommel versetzt angeordneten Schwenkspiegel verursacht wird, vernachlässigt werden kann.

Eine weitere vorteilhafte Ausführungsform weist eine außerhalb der Rolltrommel angeordnete Lichtquelle, beispielsweise einen Laser, auf, wobei der Licht- bzw. Laserstrahl parallel zur Rotationsachse der Rolltrommel zugeführt wird, und wobei die Strahlführmittel einen Umlenkspiegel aufweisen, welcher den Licht- bzw. Laserstrahl auf den Schwenkspiegel der Strahlführmittel umlenkt. Bei dieser Ausführungsform lassen sich somit die vorteilhafte Anordnung der Strahlführmittel in der Rolltrommel mit dem Vorteil eines außerhalb der Rolltrommel angeordneten und somit leicht zugänglichen Lasers verbinden.

Weitere bevorzugte Ausführungsformen der Erfindung sind in den Unteransprüchen angegeben.

Zwei bevorzugte Ausführungsformen der Erfindung werden nun mit Bezug auf die Zeichnung beschrieben. Die Zeichnung zeigt:
- Figur 1: eine erste Ausführungsform einer erfindungsgemäßen Perforationsvorrichtung in einer schematischen Seitenansicht;
- Figur 2: eine Aufsicht auf einen Teil der Perforationsvorrichung gemäß Figur 1;
- Figur 3: eine zweite Ausführungsform einer erfindungsgemäßen Performationsvorrichtung in einer schematischen Seitenansicht; und
- Figur 4: eine Aufsicht auf einen Teil der Ausführungsform gemäß Figur 3.

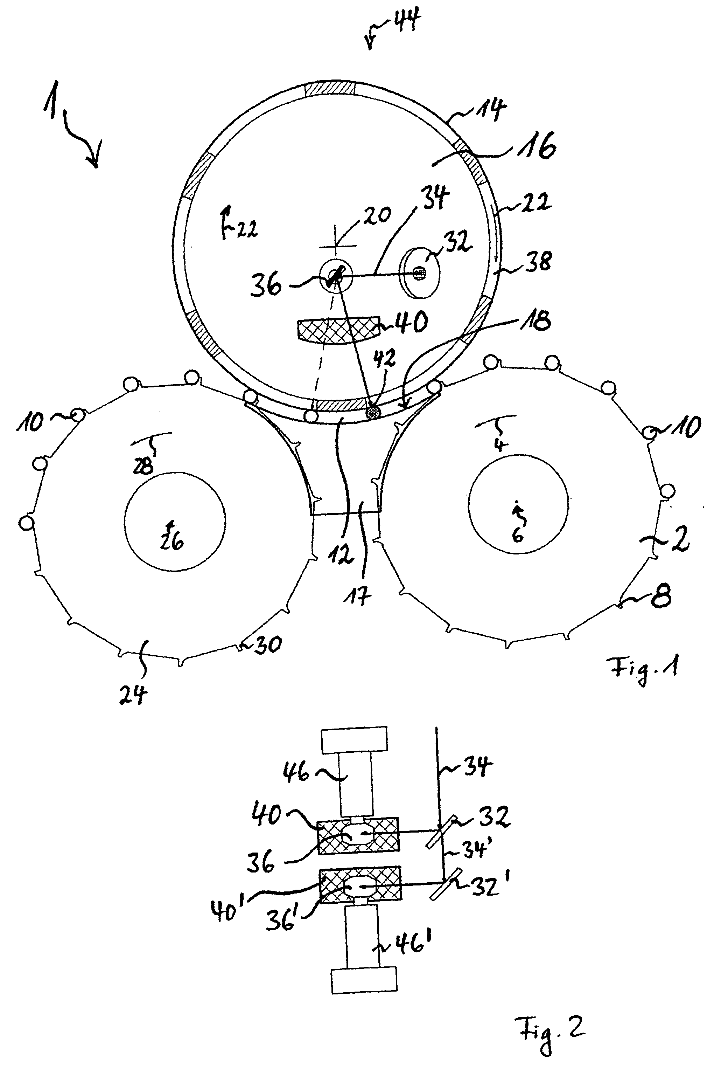

Figur 1 zeigt eine erste Ausführungsform einererfindungsgemäßen Perforationsvorrichtung 1 in einer schematischen Seitenansicht. Die Perforationsvorrichtung 1 weist eine Zufördertrommel 2 auf. Die Zufördertrommel 2 rotiert in der durch den Pfeil 4 dargestellten Rotationsrichtung um die Rotationsachse 6. Auf der Umfangsoberfläche weist die Zufördertrommel 2 in gleichbleibendem Teilungsabstand Mitnehmer 8 auf. Die Mitnehmer 8 weisen (nicht dargestellte) radiale Öffnungen zum Halten der zu perforierenden Doppelfilterzigaretten 10 mit Saugluft an der Umfangsoberfläche der Zufördertrommel 2 auf.

Die Zufördertrommel 2 übergibt die Doppelfilterzigaretten 10 an einen Rollkanal 12. Der Rollkanal 12 wird von der Umfangsoberfläche 14 einer Rolltrommel 16 und einer durch die Oberfläche eines Rollklotzes 17 gebildeten Gegenrollfläche 18 gebildet. Der Rollkanal 12 weist über seine Länge einen gleichbleibenden Abstand zwischen Umfangsoberfläche 14 und Gegenrollfläche 18 auf. Durch die Rotation der Rolltrommel 16 um die Rotationsachse 20 in der durch den Pfeil 22 angedeuteten Richtung und der dem gegenüber stillstehenden Gegenrollfläche 18 werden die Doppelfilterzigaretten 10 in dem Rollkanal 12 in eine Rollbewegung versetzt. Die Umfangsgeschwindigkeit der Rolltrommel 16 ist dabei so gewählt, daß in dem Zeitintervall; in welchem benachbarte Doppelfilterzigaretten 10 auf der Zufördertrommel 2 einen Weg entsprechend ihrem Abstand auf der Zufördertrommel 2 zurücklegen, die Doppelfilterzigaretten 10 im Rollkanal 12 einen Weg zurücklegen, der länger ist als ihr Umfang.

Die Rotationsachse 20 der Rolltrommel 16 verläuft parallel zu der Rotationsachse 6 der Zufördertrommel 2.

Nach Durchlaufen des Rollkanales 12 verlassen die Doppelfilterzigaretten 10 den Rollkanal 12 und gelangen auf eine Abfördertrommel 24. Die Abfördertrommel 24 rotiert um eine parallel zur Rotationsachse 6 der Zufördertrommel 2 angeordnete Rotationsachse 26 in der durch den Pfeil 28 angedeuteten, der Rotationsrichtung 4 der Zufördertrommel 2 entsprechenden Rotationsrichtung.

Die Abfördertrommel 24 weist auf ihrer Umfangsoberfläche ebenfalls Mitnehmer 30 auf. Die Mitnehmer 30 entsprechen den Mitnehmern 8 der Zufördertrommel 2. Auch bei der Abfördertrommel 24 sind radiale Öffnungen benachbart zu den Mitnehmern 30 vorgesehen, um die Doppelfilterzigaretten 10 an die Umfangsoberfläche der Abfördertrommel 24 ansaugen zu können.

Zur Perforation der Doppelfilterzigaretten 10 während ihrer Rollbewegung in dem Rollkanal 12 weist die Perforationsvorrichtung 1 eine (nicht dargestellte) als Laser ausgebildete Lichtquelle auf. Die Lichtquelle sendet über einen Umlenkspiegel 32 einen Laserstrahl 34 auf einen Schwenkspiegel 36. Dabei wird der Laserstrahl von dem Laser zunächst parallel zur Rotationsachse 20 der Rolltrommel 16 in das Innere der Rolltrommel 16 geleitet. Anschließend wird mit Hilfe des Umlenkspiegels 32 der Laserstrahl 34 um 90° auf den Schwenkspiegel 36 umgelenkt. Mit Hilfe des Schwenkspiegels 36 wird der Lichtstrahl 34 dann erneut in Richtung auf die Umfangsoberfläche 14 der Rolltrommel 16 umgelenkt. Die Umfangsoberfläche 14 der Rolltrommel 16 kann der Lichtstrahl 34 durch sich in Umfangsrichtung der Rolltrommel 16 erstreckende Öffnungen 38 durchdringen. Diese Öffnungen 38 sind schlitzartig ausgeführt, um eine möglichst große Rollfläche zu behalten.

Durch die oben erläuterte Tatsache, daß die Doppelfilterzigaretten 10 in dem Rollkanal einen ihren Umfang überragenden Wegabschnitt zurücklegen, wird dem Schwenkspiegel 36 die Möglichkeit gegeben, innerhalb des Zeitintervalles, in welchem die Gegenstände den ihren Umfang überragenden Wegabschnitt zurücklegen, eine Rückschwenkbewegung in seine Anfangsposition auszuführen, um an der selben Stelle beginnend die nächste Doppelfilterzigarette 10 zu perforieren.

Zwischen Schwenkspiegel 36 und dem Rollkanal 12 ist eine plankonvexe Linse 40 angeordnet. Die Linse 40 fokussiert den Laserstrahl 34 derart, daß sich der Brennpunkt des Laserstrahls 34 genau an dem Auftreffpunkt 42 des Laserstrahls 34 auf der Doppelfilterzigarette 10 in dem Rollkanal 12 befindet.

Während sich die Doppelfilterzigarette 10 durch den Rollkanal 12 rollend bewegt, wird der Laserstrahl 34 mit Hilfe des Schwenkspiegels 36 nachgeführt, um den gesamten Umfang der Doppelfilterzigarette 10 an der gewünschten Stelle mit einer Perforation zu versehen. Zu diesem Zweck ist der Laserstrahl 34 gepulst.

Die Figur 2 zeigt einen Teil der Perforationsvorrichtung 1 gemäß Figur 1 in einer Aufsicht gemäß Pfeil 44 in der Figur 1. Die Figur 2 zeigt den parallel zur Rotationsachse 20 der Rolltrommel 16 in die Rolltrommel 16 gelangenden Laserstrahl 34, den Umlenkspiegel 32, den Schwenkspiegel 36 und die Linse 40. Zum Verschwenken des Schwenkspiegels 36 ist ein Antrieb 46 vorgesehen. Gemäß Figur 2 ist der Umlenkspiegel 32 halbdurchlässig ausgebildet. Somit kann 50% des Laserlichtes des Laserstrahles 34 in einem Strahl 34' auf einen zweiten Umlenkspiegel 32' und von dort auf einen zweiten Schwenkspiegel 36' treffen. Derzweite Schwenkspiegel 36' wird von einem zweiten Antrieb 46' angetrieben. Von dem Schwenkspiegel 36' trifft der zweite Laserstrahl 34' auf eine zweite Linse 40'. Somit lassen sich mit Hilfe der Perforationsvorrichtung 1 zwei parallel verlaufende Perforationsreihen auf den Doppelfilterzigaretten 10 einperforieren.

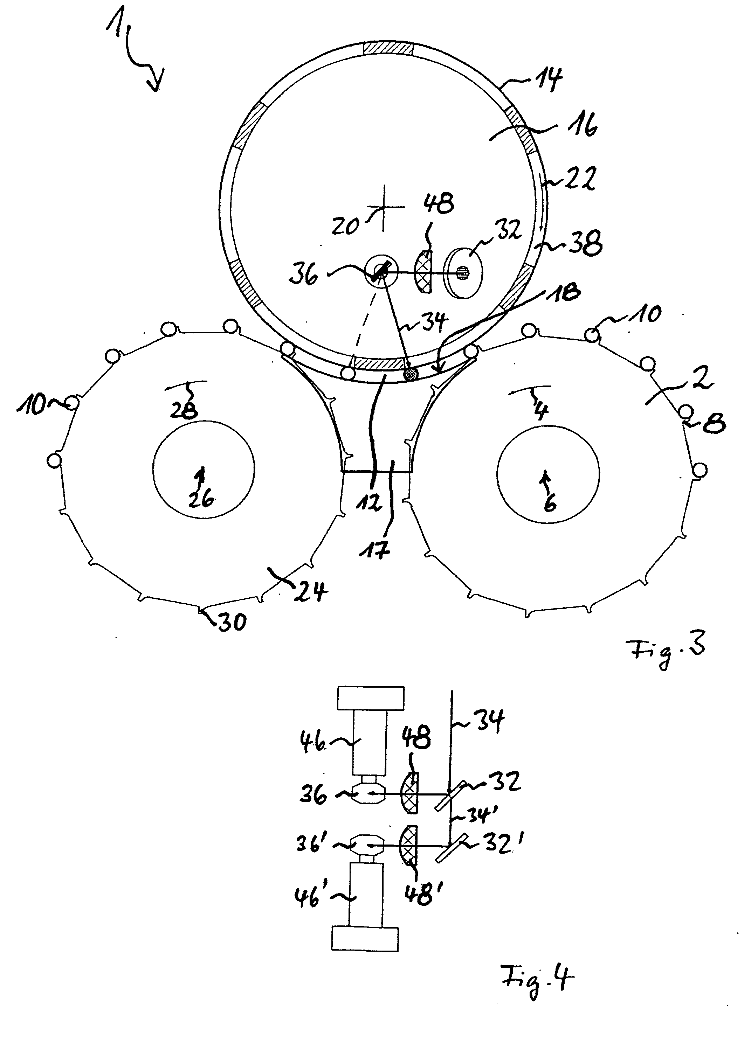

Die Figur 3 zeigt eine zweite Ausführungsform einer erfindungsgemäßen Perforationsvorrichtung 1. In der Figur 3 sind gleiche Teile wie in der Figur 1 mit gleichen Bezugszeichen bezeichnet.

Im Unterschied zur Ausführungsform gemäß Figur 1 zeigt die Figur 3 eine zwischen dem Umlenkspiegel 32 und dem Schwenkspiegel 36 angeordnete Linse 48. Somit trifft der Laserstrahl 34 von dem Umlenkspiegel 32 zunächst auf die Linse 48, um von dieser fokussiert zu werden, und trifft dann anschließend auf den Schwenkspiegel 36 und von dort aus auf den zu perforierenden Gegenstand, hier eine Doppelfilterzigarette 10.

Die Figur 4 zeigt ebenfalls eine schematische Aufsicht auf einen Teil der Perforationsvorrichtung 1 gemäß Figur 3. Auch hier sind gleiche Teile wie in der Figur 2 mit gleichen Bezugszeichen bezeichnet. Im Unterschied zu der Ausführungsform gemäß Figur 2 ist die Linse 48 bzw. die zweite Linse 48' zwischen dem Umlenkspiegel 32 und dem Schwenkspiegel 36 bzw. zwischen dem Umlenkspiegel 32' und dem Schwenkspiegel 36' angeordnet.

## Patentansprüche

1. Perforationsvorrichtung zum Herstellen von Öffnungen (38) in einer Umfangsoberfläche eines im wesentlichen länglichen, zylinderförmigen Gegenstandes (10), insbesondere einer Zigarette,
mit mindestens einer Lichtquelle zum Erzeugen mindestens eines energiereichen Lichtstrahles (34), mit dessen Hilfe die Öffnungen in den Gegenstand (10) einbringbar sind,
mit einer Rolltrommel (16) mit einer Rotationsachse (20) und einer Umfangsoberfläche (14),
mit einer Gegenrollfläche (18), die mit der Umfangsoberfläche (14) der Rolltrommel (16) einen Rollkanal (12) zum Erzeugen einer Eigenrotationsbewegung der Gegenstände (10) um ihre Längsachse bildet, während sich die Gegenstände (10) durch den Rollkanal (12) bewegen,
mit Strahlführungsmitteln (32, 36, 40, 48) zum Führen des Lichtstrahles (34) derart, daß der Lichtstrahl (34) zumindest während eines Abschnittes der Bewegung der Gegenstände ( 1 0) durch den Rollkanal (12) auf die Gegenstände (10) trifft,
**dadurch gekennzeichnet, daß** die Strahlführmittel (32, 36, 40, 48) innerhalb der Rolltrommel (16) angeordnet sind.

2. Perforationsvorrichtung nach Anspruch 1,
wobei die Strahlführmittel (32, 36, 40, 48) mindestens einen um eine Schwenkachse schwenkbaren Schwenkspiegel (36) aufweisen.

3. Perforationsvorrichtung nach einem der vorstehenden Ansprüche,
wobei die Umfangsgeschwindigkeit der Rolltrommel (16) derart ist, daß in dem Zeitintervall, in welchem benachbarte Gegenstände (10) auf einem Zuförderer einen Weg entsprechend ihrem Abstand zurücklegen, die Gegenstände (10) im Rollkanal (12) einen Weg zurücklegen, der länger ist als ihr Umfang.

4. Perforationsvorrichtung nach Anspruch 3,
wobei die Zeit innerhalb des Zeitintervalles, in welchem die Gegenstände (10) den ihren Umfang überragenden Wegabschnitt zurücklegen, für ein Rückschwenken des Schwenkspiegels (36) in eine Anfangsposition nutzbar ist, um an der selben Stelle beginnend den nächsten Gegenstand (10) zu perforieren.

5. Perforationsvorrichtung nach Anspruch 2 und einem der vorstehenden Ansprüche,
wobei die Schwenkachse in der Spiegeloberfläche des Schwenkspiegels (36) liegt.

6. Perforationsvorrichtung nach Anspruch 3 und einem der vorstehenden Ansprüche,
wobei die Schwenkachse des Schwenkspiegels (36) parallel zu der Rotationsachse (20) der Rolltrommel (16) verläuft.

7. Perforationsvorrichtung nach Anspruch 6,
wobei die Schwenkachse des Schwenkspiegels (36) koaxial zu der Rotationsachse (20) der Rolltrommel (16) verläuft.

8. Perforationsvorrichtung nach Anspruch 7,
wobei der Abstand der Schwenkachse des Schwenkspiegels (36) von den Auftreffpunkten (42) des Lichtstrahles (34) auf den Gegenständen (10) kleiner ist als der Radius der Rolltrommel (16).

9. Perforationsvorrichtung nach einem der vorstehenden Ansprüche,
wobei die Strahlführmittel (32, 36, 40, 48) mindestens ein Lichtbrechungsmittel (40, 48) aufweisen.

10. Perforationsvorrichtung nach den Ansprüchen 2 und 9,
wobei das Lichtbrechungsmittel (48) zwischen der Lichtquelle und dem Schwenkspiegel (36) angeordnet ist.

11. Perforationsvorrichtung nach den Ansprüchen 2 und 9,
wobei das Lichtbrechungsmittel (40) zwischen dem Schwenkspiegel (36) und den Auftreffpunkten (42) des Lichtstrahles (34) auf den Gegenständen (10) angeordnet ist.

12. Perforationsvorrichtung nach einem der Ansprüche 9 bis 11,
wobei das Lichtbrechungsmittel eine Sammellinse (48) und/oder eine Kombination aus Sammel- und Zerstreuungslinse und/oder eine diffraktive Optik ist.

13. Perforationsvorrichtung nach Anspruch 2 und nach einem der vorstehenden Ansprüche,
wobei die Lichtquelle außerhalb der Rolltrommel (16) angeordnet ist, wobei der Lichtstrahl (34) parallel zur Rotationsachse (20) der Rolltrommel (16) in die Rolltrommel (16) gelangt, und wobei die Strahlführmittel (32, 36, 40, 48) einen Umlenkspiegel (32) aufweisen, um den Lichtstrahl (34) auf den Schwenkspiegel (36) umzuleiten.

14. Perforationsvorrichtung nach einem der vorstehenden Ansprüche,
wobei die Rolltrommel (16) mit sich in Umfangsrichtung erstreckenden Öffnungen (38) versehen ist, durch welche Öffnungen (38) hindurch der Lichtstrahl (34) auf die Gegenstände (10) einwirkt.

## Claims

1. A perforating apparatus for producing openings (38) in a peripheral surface of a substantially elongate, cylindrical object (10), in particular a cigarette, comprising
at least one light source for producing at least one energy-rich light beam (34) by means of which the openings can be formed in the object (10),
a rolling drum (16) having an axis of rotation (20) and a peripheral surface (14),
a counterpart rolling surface (18) which with the peripheral surface (14) of the rolling drum (16) forms a rolling passage (12) for producing a rotary movement of the objects (10) about their own longitudinal axis, while the objects (10) are moving through the rolling passage, and
beam guide means (32, 36, 40, 48) for guiding the light beam (34) in such a way that at least during a part of the movement of the objects (10) through the rolling passage (12) the light beam impinges on the objects (10), **characterised in that** the beam guide means (32, 36, 40, 48) are arranged within the rolling drum (16).

2. A perforating apparatus according to claim 1 wherein the beam guide means (32, 36, 40, 48) have at least one pivoting mirror (36) which is pivotable about a pivot axis.

3. A perforating apparatus according to one of the preceding claims wherein the peripheral speed of the rolling drum (16) is such that, in the period of time in which adjacent objects (10) on a feed conveyor cover a distance corresponding to their spacing, the objects (10) in the rolling passage (12) cover a distance which is longer than their periphery.

4. A perforating apparatus according to claim 3 wherein the time within the period in which the objects (10) cover the portion of travel distance which exceeds their periphery, can be used for the pivoting mirror (36) to pivot back into an initial position in order to perforate the next object (10), beginning at the same location.

5. A perforating apparatus according to claim 2 and one of the preceding claims wherein the pivot axis lies in the surface of the pivoting mirror (36).

6. A perforating apparatus according to claim 3 and one of the preceding claims wherein the pivot axis of the pivoting mirror (36) extends parallel to the axis of rotation (20) of the rolling drum (16).

7. A perforating apparatus according claim 6 wherein the pivot axis of the pivoting mirror (36) extends coaxially with respect to the axis of rotation (20) of the rolling drum (16).

8. A perforating apparatus according to claim 7 wherein the spacing of the pivot axis of the pivoting mirror (36) from the impingement points (42) of the light beam (34) on the objects (10) is smaller than the radius of the rolling drum (16).

9. A perforating apparatus according to one of the preceding claims wherein the beam guide means (32, 36, 40, 48) have at least one light-refraction means (40, 48).

10. A perforating apparatus according to claims 2 and 9 wherein the light-refraction means (48) is arranged between the light source and the pivoting mirror (36).

11. A perforating apparatus according to claims 2 and 9 wherein the light-refraction means (40) is arranged between the pivoting mirror (36) and the impingement points (42) of the light beam (34) on the objects (10).

12. A perforating apparatus according to one of claims 9 to 11 wherein the light-refraction means is a convergent lens (48) and/or a combination of convergent and divergent lenses and/or a diffractive optical system.

13. A perforating apparatus according to claim 2 and according to one of the preceding claims wherein the light source is arranged outside the rolling drum (16), wherein the light beam (34) passes into the rolling drum (16) in parallel relationship with the axis of rotation (20) of the rolling drum (16), and wherein the beam guide means (32, 36, 40, 48) have a deflection mirror (32) for diverting the light beam (34) onto the pivoting mirror (36).

14. A perforating apparatus according to one of the preceding claims wherein the rolling drum (16) is provided with peripherally extending openings (38) through which the light beam (34) acts on the objects (10).

## Revendications

1. Dispositif de perforation permettant de pratiquer des orifices (38) dans la surface extérieure d'un objet essentiellement allongé et cylindrique (10), en particulier une cigarette, au moyen d'au moins une source lumineuse permettant de générer au moins un rayon lumineux de haute énergie (34) permettant de pratiquer les orifices dans l'objet (10), présentant un tambour à rouler (16) ayant un axe de rotation (20) et une surface limite extérieure (14),
présentant une surface à rouler antagoniste (18) formant avec la surface limite extérieur (14) du tambour à rouler (16) un canal de roulement (12) générant une rotation des objets eux-mêmes (10) autour de leur axe longitudinal lorsque lesdits objets (10) se déplacent dans le canal de roulement (12),
présentant des moyens de guidage des rayons lumineux (32, 36, 40, 48) permettant de guider le rayon lumineux (34) de telle sorte que ledit rayon lumineux (34) fait incidence sur les corps (10), au moins durant une section du déplacement de ces corps (10) dans le canal roulement (12),
dispositif **caractérisé en ce que** les moyens de guidage des rayons lumineux (32, 36, 40, 48) sont disposés à l'intérieur du tambour à rouler (16).

2. Dispositif de perforation selon la revendication 1,
les moyens de guidage des rayons lumineux (32, 36, 40, 48) présentant au moins un miroir pivotant (36) basculant autour d'un axe de pivotement.

3. Dispositif de perforation selon l'une quelconque des revendications précédentes, la vitesse périphérique du tambour à rouler (16) étant telle que, durant l'intervalle de temps nécessaire à deux corps (10) voisins se trouvant sur un dispositif d'amenée pour parcourir la distance qui les sépare, les corps (10) se trouvant dans le canal de roulement (12) parcourent un chemin plus long que leur circonférence.

4. Dispositif de perforation selon la revendication 3,
le temps à l'intérieur de l'intervalle de temps dans lequel les corps (10) parcourent ledit chemin plus long que leur circonférence étant utilisé pour faire retourner le miroir pivotant (36) dans sa position initiale, afin de perforer le corps (10) suivant, commençant à la même place.

5. Dispositif de perforation selon la revendication 2 et l'une quelconque des revendications précédentes,
l'axe de pivotement se trouvant dans la surface de réflexion du miroir pivotant (36).

6. Dispositif de perforation selon la revendication 3 et l'une quelconque des revendications précédentes,
l'axe de pivotement du miroir pivotant (36) étant parallèle à l'axe de rotation (20) du tambour à rouler (16).

7. Dispositif de perforation selon la revendication 6,
l'axe de pivotement du miroir pivotant (36) étant disposée coaxialement à l'axe de rotation (20) du tambour à rouler (16).

8. Dispositif de perforation selon la revendication 7,
la distance entre l'axe de pivotement du miroir pivotant (36) et les points d'incidence (42) du rayon lumineux (34) sur les corps (10) étant plus petite que le rayon du tambour à rouler (16).

9. Dispositif de perforation selon l'une quelconque des revendications précédentes,
les moyens de guidage des rayons lumineux (32, 36, 40, 48) présentant au moins un moyen de réfraction (40, 48).

10. Dispositif de perforation selon les revendications 2 et 9,
le moyen de réfraction (48) étant disposé entre la source lumineuse et le miroir pivotant (36).

11. Dispositif de perforation selon les revendications 2 et 9,
le moyen de réfraction (40) étant disposé entre le miroir pivotant (36) et les points d'incidence (42) du rayon lumineux (34) sur les corps (10).

12. Dispositif de perforation selon l'une quelconque des revendications 9 à 11,
le moyen de réfraction étant constitué d'une lentille convergente (48) et/ou d'une combinaison d'une lentille convergente et d'une lentille divergente et/ou étant un système optique de réfraction.

13. Dispositif de perforation selon la revendication 2 et selon l'une quelconque des revendications précédentes,
la source lumineuse étant placée en dehors du tambour à rouler (16), le rayon lumineux (34) arrivant dans le tambour à rouler (16) parallèlement à l'axe de rotation (20) dudit tambour à rouler (16) et les moyens de guidage des rayons lumineux (32, 36, 40, 48) présentant un miroir de déviation (32) permettant de détourner le rayon lumineux (34) sur le miroir pivotant (36).

14. Dispositif de perforation selon l'une quelconque des revendications précédentes,
le tambour à rouler (16) étant pourvu d'orifices périphériques (38) et le rayon lumineux (34) agissant sur les corps (10) au travers desdits orifices (38).
